(19) **Europäisches Patentamt** / **European Patent Office** / **Office européen des brevets**

(11) **EP 2 213 990 B1**

(12) **FASCICULE DE BREVET EUROPEEN**

(45) Date de publication et mention de la délivrance du brevet:
**17.08.2016 Bulletin 2016/33**

(51) Int Cl.:
***G01D 18/00*** *(2006.01)*

(21) Numéro de dépôt: **10000571.9**

(22) Date de dépôt: **21.01.2010**

(54) **Procédé de calibration et/ou de correction d'un dispositif d'affichage ayant une aiguille, l'aiguille étant mobile en rotation autour d'un axe de rotation**

Eich- und/oder Korrekturverfahren einer Anzeigevorrichtung mit einer Nadel, die beweglich ist und sich um eine Rotationsachse dreht

Method of calibration and/or correction of a display device comprising a pointer, the pointer being rotatable around a rotation axis

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **22.01.2009 FR 0900283**
**22.01.2009 FR 0900284**

(43) Date de publication de la demande:
**04.08.2010 Bulletin 2010/31**

(73) Titulaire: **Johnson Controls Technology Company Holland, MI 49423 (US)**

(72) Inventeurs:
• **Daurelle, Jean-Yves**
**75017 Paris (FR)**

• **Lemoult, Jean-Claude**
**72400 Cherre (FR)**

(74) Mandataire: **Schwöbel, Thilo K. et al Kutzenberger Wolff & Partner Theodor-Heuss-Ring 23 50668 Köln (DE)**

(56) Documents cités:
| | |
|---|---|
| EP-A- 0 571 759 | EP-A- 0 666 643 |
| EP-A- 1 720 021 | WO-A-01/65569 |
| DE-A1- 4 125 724 | DE-A1-102007 018 523 |
| US-A- 5 665 897 | US-A- 5 847 475 |

**Description**

La présente invention concerne un procédé de calibration et/ou de correction d'un dispositif d'affichage ayant une aiguille, l'aiguille étant mobile en rotation autour d'un axe de rotation.

Des procédés de calibration et/ou de correction d'un dispositif d'affichage sont connus, notamment de la demande de brevet allemande DE 10 2005 055 90E A1. Ce document prévoit une compensation ou une calibration d'un dispositif d'affichage ayant une aiguille comprenant un anneau. Sur cet anneau, un élément de repérage est prévu de façon à ce que le dispositif d'affichage puisse - par exemple à l'aide d'un capteur optique ou à l'aide d'un capteur magnétique - connaître sa position d'ajustage, par exemple le dispositif d'affichage peut connaître son point de départ. DE 10 2007 018523 A1 divulgue un procédé et un appareil pour l'étalonnage d' un instrument à aiguille avec un moteur pas à pas comprenant un aimant permanent, en particulier pour un véhicule automobile.

Il est évident qu'une restriction sur la forme de l'aiguille comme prévue dans ce document de l'état de la technique constitue un inconvénient. Par ailleurs, un autre inconvénient d'une telle solution selon l'art connu consiste dans la nécessité de prévoir un élément de repérage et des moyens de traitement des signaux d'un capteur optique ou magnétique augmente le coût de revient d'un tel dispositif d'affichage.

Pour les dispositifs d'affichage qui subissent une calibration ou une correction entre les valeurs affichées et les valeurs à afficher, correction effectuée préalablement à la vente du dispositif d'affichage à un client final, notamment préalable au montage du dispositif d'affichage dans un véhicule, le temps pour effectuer une telle calibration ou correction doit être minimisé car facteur important des coûts de production de tels dispositifs d'affichage. Pour cette raison, un compromis entre une calibration optimale ou correction optimale du dispositif d'affichage d'une part (requérant un temps et un effort élevé pour la calibration) ainsi qu'un temps et un effort raisonnable pour effectuer la calibration ou la correction d'autre part doit être visé.

La présente invention a notamment pour but de palier les inconvénients de l'art connu, et notamment ceux cités ci-dessus, et a également pour but de proposer un procédé de calibration et/ou de correction d'un dispositif d'affichage qui est plus fiable et plus rapide.

Suivant l'invention, ce but est atteint par un procédé de calibration et/ou de correction d'un dispositif d'affichage ayant une aiguille, l'aiguille étant mobile en rotation autour d'un axe de rotation et l'aiguille étant entraînée par l'intermédiaire d'un moteur pas à pas, le procédé de calibration comprend les étapes suivantes:

une première mesure d'une première différence entre une première valeur affichée par l'aiguille et une première valeur à afficher par l'aiguille,

une deuxième mesure d'une deuxième différence entre une deuxième valeur affichée par l'aiguille et une deuxième valeur à afficher par l'aiguille,

une troisième mesure d'une troisième différence entre une troisième valeur affichée par l'aiguille et une troisième valeur à afficher par l'aiguille,

une quatrième mesure d'une quatrième différence entre une quatrième valeur affichée par l'aiguille et une quatrième valeur à afficher par l'aiguille,

un calcul d'une valeur de correction en fonction de la première différence, la deuxième différence, la troisième différence et la quatrième différence, la valeur de correction correspondant à une fonction polynomiale d'au moins du troisième degré, lors de la première, deuxième, troisième et quatrième mesure respectivement, une image du dispositif d'affichage est enregistrée à l'aide d'une caméra, lors de la première, deuxième, troisième et quatrième mesure respectivement, une opération de traitement numérique de l'image est effectuée lors de cette opération de traitement, la première, deuxième, troisième et quatrième différence sont évaluées.

De par une telle réalisation du procédé de calibration et/ou de correction d'un dispositif d'affichage, il est avantageusement possible de minimiser le temps nécessaire pour effectuer la calibration tout en réduisant l'erreur entre les valeurs affichées et les valeurs à afficher. Il s'en suit que le coût de revient pour produire de telles dispositifs d'affichage peut être réduit et le nombre de pièces produites ou calibrées par unité de temps peut être augmenté.

Un autre perfectionnement préféré de l'invention réside dans le fait que la fonction polynomiale est de la forme

$$\text{valeur de correction} = A3 * \theta 3 + A2 * \theta 2 + A1 * \theta + A0$$

θ étant l'angle affiché par rapport à l'origine de la jauge et A0, A1, A2, et A3 étant des constantes.

Un autre perfectionnement préféré de l'invention réside dans le fait que le procédé comprend une cinquième mesure d'une cinquième différence entre une cinquième valeur affichée par l'aiguille et une cinquième valeur à afficher par l'aiguille, la fonction polynomiale étant de la forme

$$\text{valeur de correction} = A4 * \theta4 + A3 * \theta3 + A2 * \theta2 + A1 * \theta + A0$$

θ étant l'angle affiché par rapport à l'origine de la jauge et A0, A1, A2, A3 et A4 étant des constantes. Pour une telle valeur de correction, cinq points de mesure sont nécessaires. La correction peut encore être amélioré par rapport à la valeur de correction de forme A3 * θ3 + A2 * θ2 + A1 * θ + A0 nécessitant seulement quatre points de mesure. Selon la présente invention, il est aussi possible de prévoir plus de points de mesure ou points de calibration. Par exemple, n+1 points de calibration peuvent être utilisés pour calculer un polynôme de degré n. Plus de points de mesure ou de calibration sont utilisés, plus de temps est nécessaire pour effectuer la calibration.

Par ailleurs, suivant la présente invention, ce but est également atteint par un procédé de calibration et/ou de correction d'un dispositif d'affichage ayant une aiguille, l'aiguille étant mobile en rotation autour d'un axe de rotation et l'aiguille étant entraînée par l'intermédiaire d'un moteur pas à pas, le procédé de calibration comprenant les étapes suivantes:

Une première mesure d'une première différence entre une première valeur affichée par l'aiguille et une première valeur à afficher par l'aiguille,

Une deuxième mesure d'une deuxième différence entre une deuxième valeur affichée par l'aiguille et une deuxième valeur à afficher par l'aiguille,

Une troisième mesure d'une troisième différence entre une troisième valeur affichée par l'aiguille et une troisième valeur à afficher par l'aiguille,

Un calcul d'une valeur de correction en fonction de la première différence, la deuxième différence et la troisième différence, la valeur de correction correspondant à une fonction sinusoïdale.

De par une telle réalisation du procédé de calibration et/ou de correction d'un dispositif d'affichage, il est avantageusement possible de minimiser le temps nécessaire pour effectuer la calibration tout en réduisant l'erreur entre les valeurs affichées et les valeurs à afficher. Il s'en suit que le coût de revient pour produire de telles dispositifs d'affichage peut être réduit et le nombre de pièces produites ou calibrées par unité de temps peut être augmenté.

Une quatrième mesure d'une quatrième différence entre une quatrième valeur affichée par l'aiguille et une quatrième valeur à afficher par l'aiguille;

Un calcul de la valeur de correction en fonction de la première différence, la deuxième différence, la troisième différence et la quatrième différence, la valeur de correction correspondant à une fonction sinusoïdale, la fonction sinusoïdale étant de la forme

$$\text{valeur de correction} = C1 * \sin( C4 * \theta - C2 ) + C3$$

θ étant l'angle affiché et C1, C2, C3 et C4 étant des constantes, lors de la première, deuxième, troisième et quatrième mesure respectivement, une image du dispositif d'affichage est enregistrée à l'aide d'une caméra,

lors de la première, deuxième, troisième et quatrième mesure respectivement, une opération de traitement numérique de l'image est effectuée,

lors de cette opération de traitement, la première, deuxième, troisième et quatrième différence sont évaluées.

Ainsi, il est avantageusement possible de garantir une erreur négligeable aux points de mesure.

En cas C4 = 1, c'est-à-dire, la fonction sinusoïdale étant de la forme

$$\text{valeur de correction} = C1 * \sin( \theta - C2 ) + C3 \, .$$

il est ainsi possible de calibrer avec seulement trois mesures. Ensuite, il faut résoudre les trois équations à trois inconnues. Il est particulièrement préféré de prendre une mesure à l'endroit d'un zéro mécanique du moteur. Il est ainsi possible de déterminer la constante C3 aisément.

Un perfectionnement particulièrement préféré de l'invention réside dans le fait que le calcul de la valeur de correction est effectué de manière numérique.

**[0016]** , Il est avantageusement possible d'effectuer le calcul d'une valeur de correction le plus simple que possible ce qui résulte dans un coût de revient réduit pour produire de telles dispositifs d'affichage.

D'autres caractéristiques et avantages de l'invention ressortiront de la lecture de la description qui suit d'un mode de réalisation particulier non limitatif de la présente invention.

Brève description des dessins

L'invention sera mieux comprise grâce à la description ci-après, qui se rapporte à des modes de réalisation préférés, donnés à titre d'exemple non limitatifs et expliqués avec références aux dessins schématiques annexés, dans lesquels :

la figure 1 est une vue schématique de face d'un dispositif d'affichage qui peut être calibré grâce au procédé de calibration et/ou de correction selon la présente invention,

la figure 2 est une vue schématique d'un diagramme des erreurs typiques à corriger entre une valeur affichée par le dispositif d'affichage d'une part et une valeur à afficher par le dispositif d'affichage. Les erreurs sont représentées en fonction de l'angle à afficher par l'aiguille.

Description des dessins

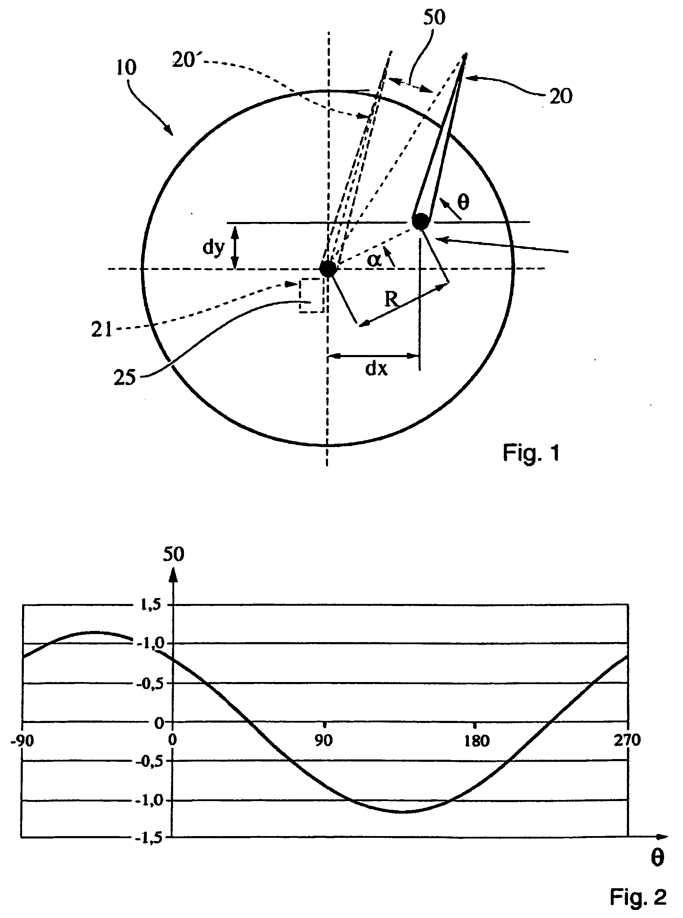

Comme le montre la figure 1 du dessin annexé, un dispositif d'affichage 10 comprend une surface d'affichage devant laquelle se trouve une aiguille 20. L'aiguille 20 comprend un axe de rotation 21 et l'aiguille 20 est entraînée en rotation par l'intermédiaire d'un moteur pas à pas 25.

La figure 1 du dessin montre une multitude de différentes sources d'erreur notamment sur le positionnement de l'aiguille 20 par rapport à la surface d'affichage qui résultent en une erreur (ou valeur de correction 50) entre la valeur affichée par l'aiguille 20 (c'est à dire la valeur marquée sur la surface d'affichage à la position de la pointe de l'aiguille 20 lorsque celle-ci se trouve à sa position réelle qui est marquée par le signe de référence 20 dans la figure 1) par rapport la valeur à afficher par l'aiguille 20 (c'est à dire la valeur marquée sur la surface d'affichage à la position de la pointe de l'aiguille 20 lorsque celle-ci se trouve à sa position théorique qui est marquée par le signe de référence 20' dans la figure 1). Parmi ces sources d'erreur figurent notamment un déplacement du centre de rotation de l'aiguille entre sa position réelle et sa position théorique ce qui donne naissance à un déplacement selon un vecteur R, ayant comme composants le déplacement dy selon l'ordonnée (ou l'axe y) et le déplacement dx selon l'abscisse (ou l'axe x), l'angle $\alpha$ étant l'angle du vecteur R.

La figure 2 du dessin montre schématiquement un diagramme des erreurs typiques à corriger (ou valeur de correction 50) entre une valeur affichée par l'aiguille 20 du dispositif d'affichage (c'est à dire la valeur marquée sur la surface d'affichage à la position de la pointe de l'aiguille 20 lorsque celle-ci se trouve à sa position réelle) d'une part et une valeur à afficher par l'aiguille 20 du dispositif d'affichage (c'est à dire la valeur marquée sur la surface d'affichage à la position de la pointe de l'aiguille 20 lorsque celle-ci se trouve à sa position théorique) d'autre part. Les erreurs (en degrés) ou valeurs de correction 50 sont représentées en fonction de l'angle $\theta$ affiché par l'aiguille 20.

On voit que typiquement une variation sinusoïdale des valeurs de correction 50 résulte des erreurs de position de l'aiguille 20.

D'autres sources d'erreur peuvent être prises en considération, notamment les erreurs d'hystérèse et de non-linéarité du moteur.

Selon la présente invention, à l'aide d'une fonction polynomiale du troisième degré, il est possible de corriger les valeurs affichées avec seulement quatre points de mesure donnant lieu à une très bonne correction.

D'autres sources d'erreurs (non représentées sur la figure 2) doivent être prises en considération pour assurer une correction efficace dans toutes les configurations, principalement la non-linéarité du moteur. Cette source d'erreur intervient si une commande de déplacement n'induit pas le même déplacement réel de l'aiguille selon sa position initiale. Ce défaut de non-linéarité a une forme complexe, différente pour chaque moteur, et ne peut pas être corrigé avec une fonction sinusoïde.

Il existe un troisième type d'erreur, appelé "smoothness", qui est due à des mouvements irréguliers du rotor, à des défauts de magnétisation, etc. Ce défaut de smoothness correspond à des vibrations très rapides et de petites amplitudes. Ce défaut est aléatoire, négligeable pour les applications automobiles et n'est pas corrigé par le procédé selon la présente invention.

Le procédé de calibration et/ou de correction selon la présente invention prévoit de mesurer pour au moins quatre points la valeur affichée par l'aiguille 20 du dispositif d'affichage 10 et de comparer ces valeurs avec les valeurs à afficher.

Ensuite, les constantes A0, A1, A2, A3, ... An sont calculées par l'intermédiaire des différences mesurées entre les valeurs à afficher et les valeurs affichées.

Avec un tel procédé de calibration et/ou de correction selon l'invention, il est possible de réaliser une excellente calibration et/ou correction tout en minimisant le nombre de mesures à effectuer lors de la calibration et ainsi de minimiser le temps nécessaire pour faire la calibration sans dégrader la précision de l'aiguille.

Selon un mode alternatif, le procédé de calibration et/ou de correction selon la présente invention prévoit de mesurer pour un certain nombre de points la valeur affichée par l'aiguille 20 du dispositif d'affichage 10 et de comparer ces valeurs avec les valeurs à afficher. La différence entre une valeur affichée par l'aiguille et une valeur à afficher par l'aiguille est comprise entre -1° et +1° sur toute la plage de valeurs utiles. Cette erreur est due quasiment totalement à l'erreur mécanique due au jeu dans le moteur.

Ensuite, les constantes C1, C2, C3 ou C1, C2, C3, C4 sont calculées par l'intermédiaire des différences mesurées entre les valeurs à afficher et les valeurs affichées.

Le procédé permet de corriger avec une seule procédure non seulement une erreur d'alignement de l'axe de l'aiguille par rapport à une surface d'affichage (c'est à dire par exemple par rapport à une sérigraphie sur la surface d'affichage illustrée par exemple par la figure 2), mais également une erreur de non-linéarité du moteur. Ainsi, une multitude de sources d'erreurs peuvent être corrigées simultanément.

Avec un tel procédé de calibration et/ou de correction il est possible de réaliser une excellente calibration et/ou correction tout en minimisant le nombre de mesures à effectuer lors de la calibration.

**Revendications**

1. Procédé de calibration et/ou de correction d'un dispositif d'affichage (10) ayant une aiguille (20), l'aiguille (20) étant mobile en rotation autour d'un axe de rotation (21) et l'aiguille (20) étant entraînée par l'intermédiaire d'un moteur pas à pas (25), le procédé de calibration comprenant les étapes suivantes:

une première mesure d'une première différence entre une première valeur affichée par l'aiguille (20) et une première valeur à afficher par l'aiguille (20),
une deuxième mesure d'une deuxième différence entre une deuxième valeur affichée par l'aiguille (20) et une deuxième valeur à afficher par l'aiguille (20),
une troisième mesure d'une troisième différence entre une troisième valeur affichée par l'aiguille (20) et une troisième valeur à afficher par l'aiguille (20),
une quatrième mesure d'une quatrième différence entre une quatrième valeur affichée par l'aiguille (20) et une quatrième valeur à afficher par l'aiguille (20),

un calcul d'une valeur de correction (50) en fonction de la première différence, la deuxième différence, la troisième différence et la quatrième différence, la valeur de correction (50) correspondant à une fonction polynomiale d'au moins du troisième degré, lors de la première, deuxième, troisième et quatrième mesure respectivement, une image du dispositif d'affichage (10) est enregistrée à l'aide d'une caméra, lors de la première, deuxième, troisième et quatrième mesure respectivement, une opération de traitement numérique de l'image est effectuêe, et ors de cette opération de traitement, la première, deuxième, troisième et quatrième différence sont évaluées.

2. Procédé selon la revendication 1, dans lequel la fonction polynomiale est de la forme

$$\text{valeur de correction} = A3 * \theta^3 + A2 * \theta^2 + A1 * \theta + A0$$

θ étant l'angle affiché et A0, A1, A2 et A3 étant des constantes.

3. Procédé selon l'une quelconque des revendications précédentes, dans lequel le procédé comprend une cinquième mesure d'une cinquième différence entre une cinquième valeur affichée par l'aiguille (20) et une cinquième valeur à afficher par l'aiguille (20), la fonction polynomiale étant de la forme

$$\text{valeur de correction} = A4 * \theta^4 + A3 * \theta^3 + A2 * \theta^2 + A1 * \theta + A0$$

θ étant l'angle affiché et A0, A1, A2, A3 et A4 étant des constantes.

4. Procédé de calibration et/ou de correction d'un dispositif d'affichage (10) ayant une aiguille (20), l'aiguille (20) étant mobile en rotation autour d'un axe de rotation (21) et l'aiguille (20) étant entraînée par l'intermédiaire d'un moteur pas à pas (25), le procédé de calibration comprenant les étapes suivantes:

une première mesure d'une première différence entre une première valeur affichée par l'aiguille (20) et une première valeur à afficher par l'aiguille (20),
une deuxième mesure d'une deuxième différence entre une deuxième valeur affichée par l'aiguille (20) et une deuxième valeur à afficher par l'aiguille (20),
une troisième mesure d'une troisième différence entre une troisième valeur affichée par l'aiguille (20) et une troisième valeur à afficher par l'aiguille (20),
une quatrième mesure d'une quatrième différence entre une quatrième valeur affichée par l'aiguille (20) et une quatrième valeur à afficher par l'aiguille (20);

un calcul de la valeur de correction (50) en fonction de la première différence, la deuxième différence, la troisième différence et la quatrième différence, la valeur de correction (50) correspondant à une fonction sinusoïdale, la fonction sinusoïdale étant de la forme

$$\text{valeur de correction} = C1 * \sin( C4 * \theta - C2 ) + C3$$

θ étant l'angle affiché et C1, C2, C3 et C4 étant des constantes,
lors de la première, deuxième, troisième et quatrième mesure respectivement,
une image du dispositif d'affichage (10) est enregistrée à l'aide d'une caméra,
lors de la première, deuxième, troisième et quatrième mesure respectivement,
une opération de traitement numérique de l'image est effectuée,
lors de cette opération de traitement, la première, deuxième, troisième et quatrième différence sont évaluées.

5. Procédé selon l'une quelconque des revendications précédentes, dans lequel le calcul de la valeur de correction (50) est effectué de manière numérique.

**Patentansprüche**

1. Verfahren zum Kalibrieren und/oder Korrigieren einer Anzeigevorrichtung (10) mit einer Nadel (20), wobei die Nadel (20) um eine Rotationsachse (21) drehbeweglich ist und die Nadel (20) mittels eines Schrittmotors (25) angetrieben wird, wobei das Kalibrierungsverfahren die folgenden Schritte umfasst:

eine erste Messung einer ersten Differenz zwischen einem ersten Wert, der von der Nadel (20) angezeigt wird, und
einem ersten Wert, der von der Nadel (20) angezeigt werden soll,
eine zweite Messung einer zweiten Differenz zwischen einem zweiten Wert, der von der Nadel (20) angezeigt wird, und einem zweiten Wert, der von der Nadel (20) angezeigt werden soll,
eine dritte Messung einer dritten Differenz zwischen einem dritten Wert, der von der Nadel (20) angezeigt wird, und einem dritten Wert, der von der Nadel (20) angezeigt werden soll,
eine vierte Messung einer vierten Differenz zwischen einem vierten Wert, der von der Nadel (20) angezeigt wird, und einem vierten Wert, der von der Nadel (20) angezeigt werden soll,
eine Berechnung eines Korrekturwertes (50) in Abhängigkeit von der ersten Differenz, der zweiten Differenz, der dritten Differenz und der vierten Differenz, wobei der Korrekturwert (50) einer Polynomfunktion mindestens dritten Grades entspricht, bei der ersten, zweiten, dritten und vierten Messung wird jeweils ein Bild der Anzeigevorrichtung (10) mit Hilfe einer Kamera aufzeichnet, bei der ersten, zweiten, dritten und vierten Messung wird jeweils ein digitaler Bearbeitungsvorgang des Bildes durchgeführt und bei diesem Bearbeitungsvorgang werden die erste, zweite, dritte und vierte Differenz ausgewertet.

2. Verfahren nach Anspruch 1, bei dem die Polynomfunktion die folgende Form hat:

$$Korrekturwert = A3 * \theta^3 + A2 * \theta^2 + A1 * \theta + A0$$

wobei θ der angezeigte Winkel ist und A0, A1, A2 und A3 konstant sind.

3. Verfahren nach einem der vorhergehenden Ansprüche, bei dem das Verfahren eine fünfte Messung einer fünften Differenz zwischen einem fünften Wert, der von der Nadel (20) angezeigt wird, und einem fünften Wert, der von der Nadel (20) angezeigt werden soll, umfasst, wobei die Polynomfunktion die folgende Form hat:

$$Korrekturwert = A4 * \theta4 + A3 * \theta^3 + A2 * \theta^2 + A1 * \theta + A0$$

wobei θ der angezeigte Winkel ist und A0, A1, A2, A3 und A4 konstant sind.

4. Verfahren zum Kalibrieren und/oder Korrigieren einer Anzeigevorrichtung (10) mit einer Nadel (20), wobei die Nadel (20) um eine Rotationsachse (21) drehbeweglich ist und die Nadel (20) mittels eines Schrittmotors (25) angetrieben wird, wobei das Kalibrierungsverfahren die folgenden Schritte umfasst:

eine erste Messung einer ersten Differenz zwischen einem ersten Wert, der von der Nadel (20) angezeigt wird, und
einem ersten Wert, der von der Nadel (20) angezeigt werden soll,
eine zweite Messung einer zweiten Differenz zwischen einem zweiten Wert, der von der Nadel (20) angezeigt wird, und einem zweiten Wert, der von der Nadel (20) angezeigt werden soll,
eine dritte Messung einer dritten Differenz zwischen einem dritten Wert, der von der Nadel (20) angezeigt wird, und einem dritten Wert, der von der Nadel (20) angezeigt werden soll,
eine vierte Messung einer vierten Differenz zwischen einem vierten Wert, der von der Nadel (20) angezeigt wird, und einem vierten Wert, der von der Nadel (20) angezeigt werden soll;
eine Berechnung des Korrekturwertes (50) in Abhängigkeit von der ersten Differenz, der zweiten Differenz, der dritten Differenz und der vierten Differenz, wobei der Korrekturwert (50) einer Sinusfunktion entspricht,

wobei die Sinusfunktion die folgende Form hat:

$$Korrekturwert = C1 * sin(C4 * \theta - C2 ) + C3$$

wobei θ der angezeigte Winkel ist und C1, C2, C3 und C4 konstant sind,
bei der ersten, zweiten, dritten und vierten Messung wird jeweils ein Bild der Anzeigevorrichtung (10) mit Hilfe einer Kamera aufzeichnet, bei der ersten, zweiten, dritten und vierten Messung wird jeweils ein digitaler Bearbeitungsvorgang des Bildes durchgeführt,
bei diesem Bearbeitungsvorgang werden die erste, zweite, dritte und vierte Differenz ausgewertet.

5. Verfahren nach einem der vorhergehenden Ansprüche, bei dem die Berechnung des Korrekturwertes (50) digital durchgeführt wird.

**Claims**

1. Method for calibrating and/or correcting a display device (10) having a needle (20), the needle (20) being movable in rotation about a rotation axis (21) and the needle (20) being driven by way of a stepper motor (25), the calibration method comprising the following steps:

a first measurement of a first difference between a first value displayed by the needle (20) and a first value to be displayed by the needle (20),
a second measurement of a second difference between a second value displayed by the needle (20) and a second value to be displayed by the needle (20),
a third measurement of a third difference between a third value displayed by the needle (20) and a third value to be displayed by the needle (20),

a fourth measurement of a fourth difference between a fourth value displayed by the needle (20) and a fourth value to be displayed by the needle (20),

calculating a correction value (50) as a function of the first difference, the second difference, the third difference and the fourth difference, the correction value (50) corresponding to a polynomial function of at least third degree, during the first, second, third and fourth measurements respectively an image of the display device (10) is recorded using a camera, during the first, second, third and fourth measurement respectively a digital processing operation is performed out on the image, and during this processing operation the first, second, third and fourth difference are evaluated.

2. Method according to claim 1, wherein the polynomial function is of the form

$$\texttt{correction value = A3 * } \theta^3 \texttt{ + A2 * } \theta^2 \texttt{ + A1 * } \theta \texttt{ + A0,}$$

$\theta$ being the displayed angle and A0, A1, A2 and A3 being constants.

3. Process according to any of the preceding claims, wherein the method comprises a fifth measurement of a fifth difference between a fifth value displayed by the needle (20) and a fifth value to be displayed by the needle (20), the polynomial function being of the form

$$\texttt{correction value = A4 * } \theta^4 \texttt{ + A3 * } \theta^3 \texttt{ + A2 * } \theta^2 \texttt{ + A1 * } \theta \texttt{ +}$$
$$\texttt{A0,}$$

$\theta$ being the displayed angle and A0, A1, A2, A3 and A4 being constants.

4. Method for calibrating and/or correcting a display device (10) having a needle (20), the needle (20) being movable in rotation about a rotation axis (21) and the needle (20) being driven by way of a stepper motor (25), the calibration method comprising the following steps:

a first measurement of a first difference between a first value displayed by the needle (20) and a first value to be displayed by the needle (20),
a second measurement of a second difference between a second value displayed by the needle (20) and a second value to be displayed by the needle (20),
a third measurement of a third difference between a third value displayed by the needle (20) and a third value to be displayed by the needle (20),
a fourth measurement of a fourth difference between a fourth value displayed by the needle (20) and a fourth value to be displayed by the needle (20);

calculating a correction value (50) as a function of the first difference, the second difference, the third difference and the fourth difference, the correction value (50) corresponding to a sinusoidal function, the sinusoidal function being of the form

$$\texttt{correction value = C1 * sin(C4 * } \theta \texttt{ - C2) + C3,}$$

$\theta$ being the displayed angle and C1, C2, C3 and C4 being constants, during the first, second, third and fourth measurements respectively an image of the display device (10) is recorded using a camera, during the first, second, third and fourth measurement respectively a digital processing operation is performed on the image, during this processing operation the first, second, third and fourth difference are evaluated.

5. Method according to any of the preceding claims, wherein the calculation of the correction value (50) is performed digitally.

Fig. 1

Fig. 2

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- DE 10200505590E A1

- DE 102007018523 A1